# EUROPEAN PATENT APPLICATION

(11) **EP 0 757 951 A2**
(43) Date of publication of application: **12.02.1997**
(21) Application number: 96112509.3
(22) Date of filing: 02.08.1996
(51) Int. Cl.: B62K 25/32

(54) **Rear shock absorbing device for scooters**

(30) Priority: 08.08.1995 IT BO950398
(71) Applicant: ITALJET S.p.A., 40068 San Lazzaro di Savena (Bologna) (IT)
(72) Inventor: Tartarini, Alessandro, 40068 San Lazzaro di Savena (BO) (IT); Tartarini, Leopoldo, 40068 San Lazzaro di Savena (BO) (IT)
(74) Representative: Porsia, Dino, Dr.

(57) **Abstract**

The part of the back wheel (R2) which is placed above the gearbox (C), is surmounted by a small and strong fork-shaped structure (1) which is fixed with one side (2-3) to the carter of the said gear, which with the opposite side is rotationally constrained with its own appendix (13) to the axis (15) of the said wheel and which is articulated in the upper part to a single shock absorber with a spring (7), placed on the middle plane of the frame (T) of the scooter. The fork-shaped structure (1) is made in two pieces (101-201, removably fixed between them and to one of which (101) the shock absorber (7) is articulated. To disassemble the back wheel of the scooter it is sufficient to disassemble the part (201) of the fork-shaped structure which is not directly constrained to the shock absorber.

## Description

In the second generation scooters, where the back wheel is overhangingly supported by the automatic gearbox of the engine group, in its turn transversally articulated to the frame of the scooters themselves, the oscillations of such rear complex are normally controlled by only one shock absorber, placed on the side of the frame, on the opposite side of the muffler and which connects to the frame itself a point of the automatic gearbox wrapper. This solution subjects the frame and the propulsion system to misaligned stresses, with often injurious torsion components.

To avoid these inconveniences, the use of two shock absorbers is known, each of which is placed on one side of the rear part of the frame of the scooter, or of one shock absorber placed in the middle of the intermediate part of said frame and connected with levers to the articulation area of the engine-gearbox group. The solution of the double shock absorber is expensive, while the last solution forces the use of one limited run shock absorber, which must undergo stresses of considerable intensity and that for this reason it is subject to rapid wear.

The invention intends to avoid the known inconveniences with the following solution. The segment of the back wheel which is placed above the gearbox, is surmounted by a small and strong fork-shaped structure which is fixed with one side to the carter of the gearbox, which with the other side is rotationally fixed to the wheel axis and which with an upper point, placed transversally and in the middle of the frame of the scooter, is connected to a wide run shock absorber, with a spring and in its turn it is anchored with the other extreme part to a median point of the said frame, in correspondence of the seat of the scooter. The said fork-shaped structure is preferably divided in two parts, of which a first part is fixed to the carter of the gearbox and is in the upper part connected to the shock absorber, while the second part, which is d rotationally constrained to the wheel axis, is removably fixed to the said first part so that when it is necessary to disassemble the back wheel of the scooter, it is sufficient to remove the said second part of the fork-shaped structure, without having to intervene on the shock absorber.

Major characteristics of the invention and the advantages deriving from it, will become apparent from the following description of a preferred form of making it, illustrated simply as an example, not limiting, in the Figures of the three enclosed table drawings, in which:
- Fig. 1 is a lateral elevation view of a scooter with the rear shock absorbing device object of the report;
- Fig. 2 is a plan view of the back part of the frame of the scooter of Figure 1;
- Fig. 3 is a schematic view and in elevation from the back face of the scooter of Figure 1;
- Fig. 4 illustrates further details of the scooter of Figure 1, sectioned according to the IV-IV line;
- Fig. 5 illustrates the detail of Figure 4 sectioned according to V-V line.

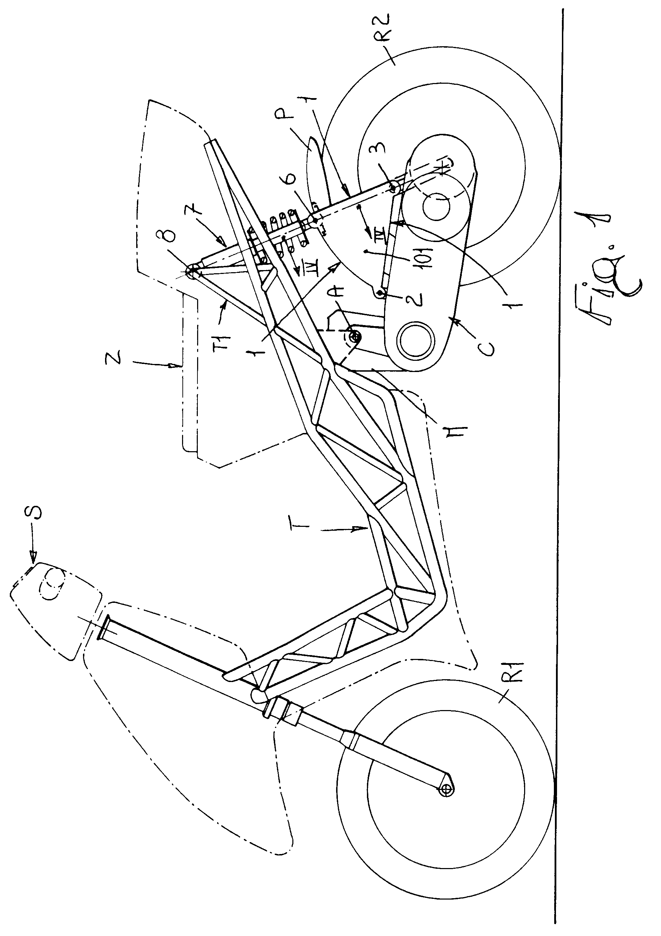

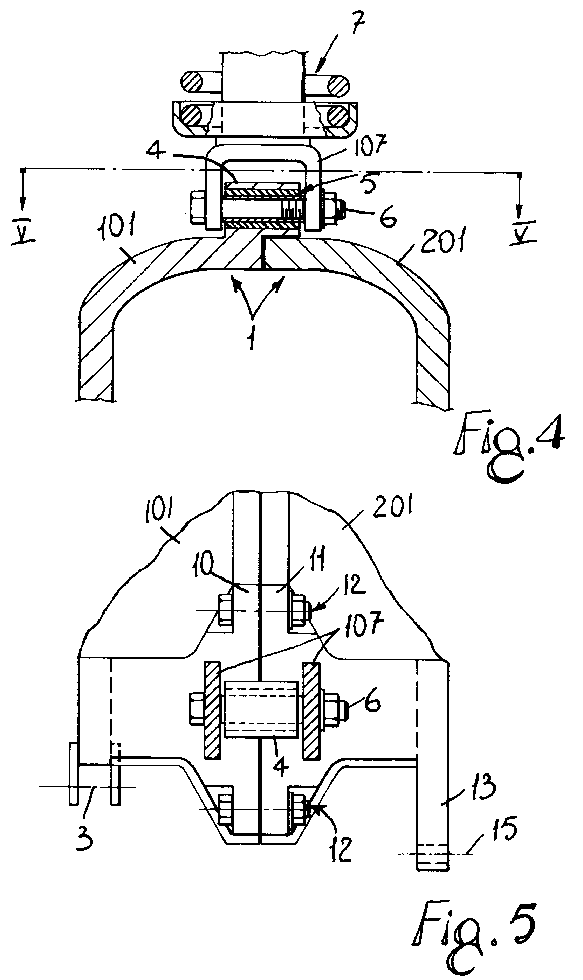

The improvements in question, must be understood as being protected even though they are being made to a scooter with a traditional frame and not necessarily reticulate beam as from Figure 1 and as protected by a separate patent application in the name of the same applicant. In Figure 1, T indicates the frame of the scooter, S the steering, R1 the front wheel, R2 the back wheel, M-C the automatic engine-gearbox group which overhangingly supports the said wheel R2 and which is articulated transversally in A at frame T, in any appropriate manner. According to the invention, the segment of wheel R2 which is above the gearbox C, is surmounted by a small and strong fork-shaped structure 1, composed by a first part 101 fixed in 2 and 3 to the carter of the group C (Figs 1-3) and which is supplied in the upper part by a ferrule 4 (Fig. 4) placed transversally and astride the middle of the frame T. At such ferrule is articulated with the interposition of a silent-block 5 and with the possibility of oscillating around the articulation bolt 6, the extremity attachment 107 of a spring shock absorber, of any suitable type, articulated with the other extreme in 8 at the attachment 9 of any suitable median appendix, raised and at the back of frame T, for example placed in correspondence of the seat Z of the scooter (Figs 1-2).

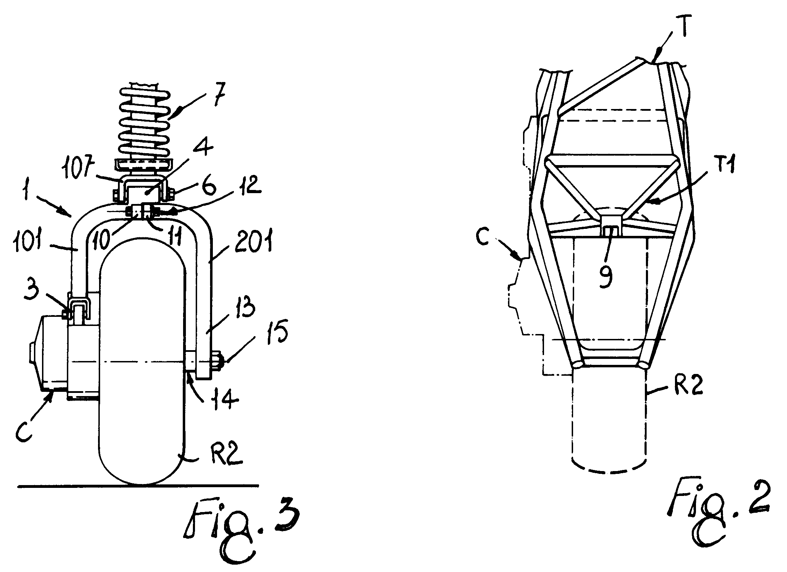

The parts 101-201 of structure 1, are equipped in correspondence of the connection point 6 to the shock absorber 7, of padded parts 10-11, symmetrical at the said point 6 and removably fixed between them by means of screws, bolts and/or other suitable means 12 (Figs. 3-5). The part 201 of structure 1 may possibly have a form complementary to that 101 and may be fixed also to a transversal extension of the constraint 2 as in Figure 1. The same part 201 is equipped with an appendix 13 which extends towards the bottom and which is prearranged in any suitable manner, as schematically indicated with 14, for the removable constraint at the axis 15 of the wheel R2 which in its turn will be appropriately prearranged for such a purpose. When the axis 15 of the wheel R2 is rotational, the constraint 14 is prearranged rotational with the interposition of bearings and/or other suitable means, all in an imaginable manner and easily accomplished by the technicians of the branch. To structure 1 which will in part be able to have the function of fender for wheel R2, the back fin of fender P can be fixed.

To disassemble the wheel R2 of the scooter, it will be necessary to unscrew the screws 12 in Figure 5, neutralise the possible anchorage to point 2 and neutralise the rotational constraint 14 at the back axis 15 of the said wheel, so as to remove the part 201 of the structure 1, without having to intervene on the shock absorber 7 which will remain connected to part 101.

It is understood that the single shock absorber 7 can be located in a different position from that illustrated, always in the middle of the frame 7 and can be connected to the ferrule 4 by means of levers, through a steel cable transmitted on pulleys or with the interposition of an hydraulic servo control. Therefore, it is understood that the description is referred to a preferred form of the putting into effect of the invention, to which numerous variants and modifications can be made, above all constructive, without for that abandoning the informative principle of the invention, as explained above, as illustrated above and as consequently vindicated. In the following claims, the references reported between parentheses are purely indicative and not limiting of the limit of protection of the same claims.

## Claims

1. Rear shock absorbing device for scooters, in which the back wheel (R2) is overhangingly supported by the automatic gearbox (C) characterised by the fact that the portion of wheel (R2) placed above the said gearbox (C) is surmounted by a fork-shaped structure (1) fixed on one part (2-3) to the carter of the gearbox itself (C), rotationally constrained with the other part to the axis (15) of the said wheel and equipped in the upper part by an attachment (4) placed transversally and astride the middle of the frame of the scooter and connected in any suitable manner to a spring shock absorber (7) also placed in the middle of the said frame and to this anchored with the other extremity, means of any suitable type being expected to remove in whole or in part the said fork-shaped structure when it is necessary to disassemble the back wheel of the scooter.

2. Device according to claim 1), in which the said fork-shaped structure (1) is formed by at least two parts, of which a first part (101) is fixed to the carter of the gearbox (C) and carries in the upper part the transversal and median attachment (4) for the connection to the shock absorber (7), while the second part (201) of the said fork-shaped structure is removably fixed to the first with screws (12) or other means and it is equipped with an appendix (13) which extends towards the axis (15) of the wheel and is associated to means (14) for the rotational and removable constraint with such axis and/or with the wheel, the whole in such a way that to disassemble the back wheel of the scooter it is sufficient to remove the said second part of the fork-shaped structure.

3. Device according to claim 2), in which the first part (101) of the fork-shaped structure (1) is fixed to two points (2-3) of the carter of the gearbox (C) and is equipped in the upper part by a transversal and median ferrule (4) for the connection with a silent block (5) to the shock absorber (7) and in correspondence to such ferrule and symmetrically to it, the said first part of the structure (101) is equipped with a pad (10) on which rests an analogous pad (11) of the second part (201) of the same fork-shaped structure (1), being such pads prearranged for the reciprocal-removable fixing with screws or bolts (12).

4. Device according to claim 3), in which the second part (201) of the fork-shaped structure (1) is prearranged for the removable constraint to a transversal extension of the advanced point (2) with which the first part (101) of the same structure (1) is fixed to the carter of the gearbox (C).

5. Rear shock absorbing device for scooters, made in whole or in part as described, as illustrated in the Figures of the three enclosed table drawings and for the purposes explained above.
